# EUROPEAN PATENT SPECIFICATION

(11) **EP 1 048 226 B1**
(45) Date of publication and mention of the grant of the patent: **31.08.2005**
(21) Application number: 99108405.4
(22) Date of filing: 29.04.1999
(51) Int. Cl.: A23L 1/29, A23L 1/305, A23L 1/30, A23L 1/09

(54) **Infant formula containing sweet whey protein**
Süssmolkeprotein enthaltende Säuglingsnahrung
Aliment pour nourrissons comprenant une protéine de petit lait doux

(43) Date of publication of application: 02.11.2000
(73) Proprietor: Société des Produits Nestlé S.A., 1800 Vevey (CH)
(72) Inventor: Kratky, Zdenek, 1613 Maracon (CH); Maire, Jean-Claude, 1092 Belmont S/Lausanne (CH)

(56) References cited:
- EP-A- 0 312 612
- EP-A- 0 418 593
- EP-A- 0 705 542
- EP-A- 0 747 395
- EP-A- 0 880 902
- DE-A- 4 344 342

## Description

### Field of the Invention

This invention relates to an infant formula which contains a hydrolysed sweet whey fraction which is low in threonine.

### Background of the Invention

Mother's milk is recommended for all infants. However, in cases where mother's milk is not available, infant formulas must be used. Normal, full-term infants are usually fed cow's-milk-based formulas. These formulas contain a mixture of casein and whey as the protein source to provide an amino acid profile as close as possible to that of mother's milk.

However, for pre-term infants and those having adverse reactions to the protein in cow's milk formula or to lactose, other types of formula are recommended. One of the main alternatives to cow's milk formula is soy formula; particularly for infants who are lactose intolerant. However, soy is not as good a protein source as cow's milk. Also, infants do not absorb some minerals, such as calcium, as efficiently from soy formulas.

Another alternative is formula based upon hydrolysed protein. These formulas are called hypoallergenic and have a decreased likelihood of an allergic reaction. Ideally to be as close as possible to human milk, the protein used should contain both whey protein and casein in an appropriate ratio. However, most formulas which contain hydrolysed protein are based upon whey protein.

The whey protein may be acid whey protein or sweet whey protein. In general, acid whey protein is preferred from a nutritional point of view since it has a lower threonine content which is closer to that of human milk.

### Summary of the Invention

Accordingly, in one aspect, this invention provides an infant formula which comprises a lipid source, a carbohydrate source, and a protein source which contains the free amino acids arginine, tyrosine, histidine and a hydrolysed sweet whey fraction from which caseino-glyco-macropeptide has been removed.

Sweet whey from which caseino-glyco-macropeptide has been removed has a reduced threonine content and an increased tryptophan content as compared to normal sweet whey and is therefore suitable as a protein source for infants. Further, it has been found that by supplementing the sweet whey fraction with the free amino acids arginine, tyrosine, and histidine, the protein source has an amino acid profile which is close to that of human milk.

Preferably, the hydrolysed sweet whey fraction is substantially free of lactose. This has the advantage that the infant formula has reduced levels of lysine blockage.

The protein source preferably comprises about 98.5% to about 97% by weight of hydrolysed sweet whey and about 1.5% to about 3% by weight of arginine, tyrosine, and histidine. The amino acids may be in free base form.

The infant formula may be a pre-term infant formula in which the protein source comprises about 1% to about 1.5% by weight histidine, about 0.6% to about 0.9% by weight arginine, and about 0.3% to about 0.5% by weight tyrosine. In this case, the lipid source may include medium chain triglycerides.

The infant formula may be a full-term, hypoallergenic infant formula in which the protein source comprises about 0.2% to about 0.4% by weight histidine, about 1% to about 2% by weight arginine, and about 0.2% to about 0.4% by weight tyrosine.

The carbohydrate source may include lactose. The lactose may be the sole source of carbohydrates.

### Detailed Description of the Invention

Embodiments of the invention are now described by way of example only. This invention provides an infant formula in which the protein source contains arginine, tyrosine, histidine and a hydrolysed sweet whey fraction from which caseino-glyco-macropeptide has been removed. The infant formula may be used for pre-term infants and infants susceptible to allergic reactions.

The sweet whey used in the protein source may be obtained from cheese making, particularly the sweet whey obtained after the coagulation of casein by rennet. The sweet whey may then be processed as desired. For example, the sweet whey may be treated to remove minerals (cations, anions), lactose, or any of these substances. The sweet whey may be concentrated as desired. Suitable sweet whey sources are commercially available. It is particularly preferred that the sweet whey is substantially lactose-free.

The sweet whey is then treated to remove caseino-glyco-macropeptide. This may be accomplished by any suitable process. One suitable process is described in European patent application 0880902. In this process, the pH of the sweet whey is adjusted to 1 to 4.3, if necessary. The sweet whey is then contacted with a weakly anionic resin which is predominantly alkaline until the pH of the sweet whey stabilises at about 4.5 to 5.5. The sweet whey fraction from which the caseino-glyco-macropeptide has been removed, is then collected.

The sweet whey fraction is then hydrolysed to prevent allergic reactions in infants at risk and to make the protein easier to digest. The hydrolysis process may be carried out as desired and as in known in the art. In general, the whey protein hydrolysate is prepared by enzymatically hydrolysing the sweet whey fraction in one or more steps. For example, for an extensively hydrolysed protein, the sweet whey proteins may be subjected to triple hydrolysis using, for example, Alcalase 2.4L (EC 940459), then Neutrase 0.5L (obtainable from Novo Nordisk Ferment AG) and then pancreatin at 55°C. Alternatively, for a less hydrolysed protein, the sweet whey may be subjected to double hydrolysis using, for example, NOVOZYMES and then pancreatin.

If the sweet whey fraction used is substantially lactose free, it is found that the protein is subjected to much less lysine blockage during the hydrolysis process. This enables the extent of lysine blockage to be reduced from about 15% by weight of total lysine to less than about 10% by weight of lysine; for example about 7% by weight of the lysine. This greatly improves the nutritional quality of the protein source.

The free amino acids L-arginine, L-tyrosine, and L-histidine are included in the protein source. Preferably, the free amino acids make up about 1.5% to about 3% by weight of the protein source. For example, the free amino acids may make up about 2% to about 2.6% by weight of the protein source.

In particular, for pre-term formulas, histidine preferably provides about 1% to about 1.5% by weight, arginine preferably provides about 0.6% to about 0.9% by weight, and tyrosine preferably provides about 0.3% to about 0.5% by weight, of the protein source. For hypoallergenic formulas, histidine preferably provides about 0.2% to about 0.4% by weight, arginine preferably provides about 1% to about 2% by weight, and tyrosine preferably provides about 0.2% to about 0.4% by weight, of the protein source.

The protein source may include other free amino acids as desired although this is unnecessary.

The carbohydrate source in the infant formula can be carbohydrate suitable for use in infant formulas. Typical carbohydrate sources include sucrose, maltodextrin, maltose, lactose, corn syrup, corn syrup solids, rice syrup solids, rice starch, and the like. Preferably, the carbohydrate source includes lactose and maltodextrin. The lactose is preferably free of any allergens. For full term formulas, the carbohydrate source is preferably lactose.

The lipid source may be any lipid or fat which is suitable for use in infant formulas. Typical lipid sources include milk fat, safflower oil, egg yolk lipid, canola oil, olive oil, coconut oil, palm oil, palm kernel oil, palm olein, soybean oil, sunflower oil, fish oil, and microbial fermentation oil containing long-chain, polyunsaturated fatty acids. These oils may be in the form of high oleic forms such as high oleic sunflower oil and high oleic safflower oil. The lipid source may also be in the form of fractions derived from these oils such as palm olein, medium chain triglycerides (MCT), and esters of fatty acids such as arachidonic acid, linoleic acid, palmitic acid, stearic acid, docosahexaeonic acid, linolenic acid, oleic acid, lauric acid, capric acid, caprylic acid, caproic acid, and the like.

For pre-term formulas, the lipid source preferably contains medium chain triglycerides; for example in an amount of about 15% to about 35% by weight of the lipid source.

The lipid source preferably has a ratio of n-6 to n-3 fatty acids of about 5:1 to about 15:1; for example about 8:1 to about 10:1

The infant formula may further contain ingredients which are designed to meet the nutritional needs of the human infant. In particular, it is preferred that the infant formula is "nutritionally complete"; that is it contains adequate nutrients to sustain healthy human life for extended periods.

The amount of protein source per 100 kcal of formula is typically about 1.8 g to about 4.5 g; for example about 1.8 g to about 4 g. For full term hypoallergenic formulas, the amount may be about 1.8 g/100 kcal to about 2.5 g/100 kcal. In order to reduce protein loading, the amount may be less than about 2 g/100 kcal. For pre-term formulas, the amount may be about 2.5 g/100 kcal to about 4 g/100 kcal.

The amount of lipid source per 100 kcal of formula may be about 3.3 g to about 6.5 g; for example about 4.4 g to about 6.5g. The amount of carbohydrate source per 100 kcal of total formula is typically about 7 g to about 14 g.

When in nutritionally complete form, the infant formula contains all vitamins and minerals understood to be essential in the daily diet and in nutritionally significant amounts. Minimum requirements have been established for certain vitamins and minerals. Examples of minerals, vitamins and other nutrients optionally present in the infant formula include vitamin A, vitamin B₁, vitamin B₂, vitamin B₆, vitamin B₁₂, vitamin E, vitamin K, vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, and L-carnitine. Minerals are usually added in salt form. The presence and amounts of specific minerals and other vitamins will vary depending on the intended infant population.

If necessary, the infant formula may contain emulsifiers and stabilisers such as soy lecithin, citric acid esters of mono- and di-glycerides, and the like. This is especially the case if the formula is provided in liquid form.

The infant formula may optionally contain other substances which may have a beneficial effect such as fibres, lactoferrin, nucleotides, nucleosides, and the like.

The infant formula may be prepared in any suitable manner. For example, for an infant formula may be prepared by blending together the protein source, the carbohydrate source, and the fat source in appropriate proportions. If used, the emulsifiers may be included in the blend. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger.

The liquid mixture may then be cooled to about 60°C to about 85°C; for example by flash cooling. The liquid mixture may then be homogenised; for example in two stages at about 7 MPa to about 40 MPa in the first stage and about 2 MPa to about 14 MPa in the second stage. The homogenised mixture may then be further cooled to add any heat sensitive components; such as vitamins and minerals. The pH and solids content of the homogenised mixture is conveniently standardised at this point.

If it is desired to produce a powdered infant formula, the homogenised mixture is transferred to a suitable drying apparatus such as a spray drier or freeze drier and converted to powder. The powder should have a moisture content of less than about 5% by weight.

If it is desired to produce a liquid infant formula, the homogenised mixture is filled into suitable containers; preferably aseptically. However, the liquid infant formula may also be retorted in the container. Suitable apparatus for carrying out filling of this nature is commercially available. The liquid infant formula may be in the form of a ready to feed formula having a solids content of about 10 to about 14% by weight or may be in the form of a concentrate; usually of solids content of about 20 to about 26% by weight.

Specific examples of the invention are now described for further illustration.

### Example 1

a) A sweet whey protein concentrate is dissolved in deionised water and the pH is adjusted to 4.25 by contacting the solution with a cation exchange resin (IMAC HP 1100 E, Rohm and Haas). The solution is treated with a weakly anionic resin (IMAC HP 661, Rohm & Haas, which has been regenerated in OH⁻ form) for about 6 hours at 8°C. Once the pH reaches about 5.25 and does not change, the solution is recovered. Over 85% of the caseino-glyco-macropeptide originally present has been removed from the solution.
b) The solution of step a) is standardised in demineralised water at 55°C. The solution is then heated to 75°C for 20 seconds. The pH of the solution is adjusted to 7.5 by the addition of Ca(OH)₂ and a solution of NaOH and KOH. The protein is then hydrolysed using the NOVOZYME enzyme (obtainable from Novo Nordisk Ferment AG). The hydrolysis reaction is continued for 4 hours at 55°C.
   An amount of pancreatin is added and the protein is further hydrolysed for 8 hours at 55°C and at a pH of 7.0. The enzymes are then inactivated by heating the reaction mixture to 90°C and holding the mixture at this temperature for about 5 minutes. The reaction mixture is then cooled to 5°C.
   The reaction mixture is then subjected to microfiltration and ultrafiltration. The hydrolysed protein is then dried by lyophilisation and packaged into metal cans. The hydrolysed protein has low levels of lysine blockage with 6.9% blocked lysine and 9% reactive lysine.
c) The hydrolysed protein of step b) is combined with 0.72% by weight L-arginine, 0.44% by weight of L-tyrosine, and 1.38% by weight of L-histidine. The mixture is formulated into a powdered infant formula. The infant formula has the following composition:

| Component | Amount per 100 kcal |
|---|---|
| Protein | 3.6 g |
| Hydrolysed whey | 3.5 g |
| Free amino acids | 0.1 g |
| Lipids | 5.2 g |
| Medium chain triglycerides | |
| High oleic sunflower oil | |
| Soya bean oil | |
| Palm olein | |
| Fish oil | |
| Egg phospholipids | |
| Carbohydrates | 9.9 g |
| Lactose | 2.0 g |
| Maltodextrin | 7.9 g |
| Vitamins and minerals | To meet regulations |

The infant formula is suitable for pre-term infants and has the following amino acid profile:-

| **Amino Acids** | **gAA/16gN** |
|---|---|
| Aspartic Acid | 11.64 |
| Threonine | 5.69 |
| Serine | 4.79 |
| Glutamic Acid | 16.69 |
| Proline | 4.90 |
| Glycine | 2.16 |
| Alanine | 5.37 |
| Cystine | 2.69 |
| Valine | 5.37 |
| Methionine | 2.26 |
| Isoleucine | 5.32 |
| Leucine | 12.53 |
| Tyrosine | 3.42 |
| Phenylalanine | 3.95 |
| Lysine | 9.58 |
| Histidine | 3.37 |
| Arginine | 3.42 |
| Tryptophan | 2.16 |

### Example 2

a) The solution of step a) of example 1 is standardised in demineralised water at 55°C. The pH is increased from 6.6 to 7.9 by addition of a 20% (weight/volume) aqueous dispersion of Ca(OH)₂. The pH is then regulated at 7.3 by compensation with a 2N aqueous solution of KOH.
   Pancreatic trypsin is added to initiate hydrolysis and the reaction is continued for 4 hours at 50° C. The hydrolysate is then heated to 90°C by injection of steam and is kept at this temperature for 5 minutes. After cooling to 55° C, the pH is readjusted to 7.3 by automatic compensation with a 2N aqueous solution of KOH. Porcine trypsin is then introduced to initiate second hydrolysis which is continued for 2 hours with automatic compensation of the pH. The hydrolysate is then heat-treated for 10 minutes at 90°C, rapidly cooled and then dried by freeze-drying.
   The hydrolysed protein has low levels of lysine blockage. The hydrolysed protein has low levels of lysine blockage with 6.9% blocked lysine and 9% reactive lysine.
b) The hydrolysed protein of step a) is combined with 1.52% by weight L-arginine, 0.3% by weight of L-tyrosine, and 0.3% by weight of L-histidine. The infant formula has the following composition:

| Component | Amount per 100 kcal |
|---|---|
| Protein | 1.9 g |
| Hydrolysed whey | 1.86 g |
| Free amino acids | 0.04 g |
| Lipids | 5.1 g |
| Palm olein | |
| Coconut oil | |
| Sunflower oil | |
| Canola oil | |
| Egg phospholipids | |
| Carbohydrates | 11.6 g |
| Lactose | 11.6 g |
| Vitamins and minerals | To meet regulations |

The infant formula is suitable for full term, hypoallergenic infants and has a balanced amino acid profile.

## Claims

1. An infant formula which comprises a lipid source, a carbohydrate source, and a protein source which contains the free amino acids arginine, tyrosine, histidine and a hydrolysed sweet whey fraction from which caseino-glyco-macropeptide has been removed.

2. An infant formula according to claim 1 in which the hydrolysed sweet whey fraction is substantially free of lactose.

3. An infant formula according to claim 1 or claim 2 in which the infant formula has less than 10% blocked lysine.

4. An infant formula according to any of claims 1 to 3 in which the protein source comprises about 98.5% to about 97% by weight of hydrolysed sweet whey fraction and about 1.5% to about 3% by weight of arginine, tyrosine, and histidine.

5. An infant formula according to any one of claims 1 to 4 which is a pre-term infant formula in which the protein source comprises about 1% to about 1.5% by weight histidine, about 0.6% to about 0.9% by weight arginine, and about 0.3% to about 0.5% by weight tyrosine.

6. An infant formula according to claim 5 in which the lipid source includes medium chain triglycerides.

7. An infant formula according to any one of claims 1 to 4 which is a full-term, hypoallergenic infant formula in which the protein source comprises about 0.2% to about 0.4% by weight histidine, about 1% to about 2% by weight arginine, and about 0.2% to about 0.4% by weight tyrosine.

8. An infant formula according to any of claims 1 to 7 in which the carbohydrate source includes lactose.

## Patentansprüche

1. Säuglings-Formulanahrung, die eine Lipidquelle, eine Kohlenhydratquelle und eine Proteinquelle enthält, die die freien Aminosäuren Arginin, Tyrosin, Histidin und eine hydrolysierte Süßmolkenfraktion enthält, aus der Caseinoglycomakropeptid entfernt wurde.

2. Säuglings-Formulanahrung nach Anspruch 1, in der die hydrolysierte Süßmolkenfraktion im Wesentlichen frei von Lactose ist.

3. Säuglings-Formulanahrung nach Anspruch 1 oder Anspruch 2, in der die Säuglings-Formulanahrung weniger als 10 % blockiertes Lysin aufweist.

4. Säuglings-Formulanahrung nach irgendeinem der Ansprüche 1 bis 3, in der die Proteinquelle etwa 98,5 bis etwa 97 Gew.-% hydrolysierte Süßmolkenfraktion und etwa 1,5 bis etwa 3 Gew.-% Arginin, Tyrosin und Histidin umfaßt.

5. Säuglings-Formulanahrung nach irgendeinem der Ansprüche 1 bis 4, die eine Formulanahrung für frühgeborene Säuglinge ist, in der die Proteinquelle etwa 1 bis etwa 1,5 Gew.-% Histidin, etwa 0,6 bis etwa 0,9 Gew.-% Arginin und etwa 0,3 bis etwa 0,5 Gew.-% Tyrosin umfaßt.

6. Säuglings-Formulanahrung nach Anspruch 5, in der die Lipidquelle mittelkettige Triglyceride einschließt.

7. Säuglings-Formulanahrung nach irgendeinem der Ansprüche 1 bis 4, die eine hypoallergene Formulanahrung für ausgetragene Säuglinge ist, in der die Proteinquelle etwa 0,2 bis etwa 0,4 Gew.-% Histidin, etwa 1 bis etwa 2 Gew.-% Arginin und etwa 0,2 bis etwa 0,4 Gew.-% Tyrosin umfaßt.

8. Säuglings-Formulanahrung nach irgendeinem der Ansprüche 1 bis 7, in der die Kohlenhydratquelle Lactose einschließt.

## Revendications

1. Formule infantile qui comprend une source de lipides, une source d'hydrates de carbone et une source de protéines qui contient les acides aminés libres arginine, tyrosine, histidine et une fraction de lactosérum doux hydrolysé duquel le caséino macro peptide glycosylé a été éliminé.

2. Formule infantile selon la revendication 1 dans laquelle la fraction de lactosérum doux est substantiellement dépourvue de lactose.

3. Formule infantile selon la revendication 1 ou la revendication 2 dans laquelle la formule infantile contient moins de 10 % de lysine bloquée.

4. Formule infantile selon l'une quelconque des revendications 1 à 3 dans laquelle la source de protéines comprend une fraction de lactosérum doux à raison d'environ 98,5 % à environ 97 % en poids et de l'arginine, de la tyrosine et de l'histidine à raison d'environ 1,5 % à environ 3 % en poids.

5. Formule infantile selon l'une quelconque des revendications 1 à 4, qui est une formule infantile pour enfant prématuré, dans laquelle la source de protéines comprend de l'histidine à raison d'environ 1 % à environ 1,5 % en poids, de l'arginine à raison d'environ 0,6 % à environ 0,9 % en poids et de la tyrosine à raison d'environ 0,3 % à environ 0,5 % en poids.

6. Formule infantile selon la revendication 5 dans laquelle la source de lipides comprend des triglycérides à chaîne moyenne.

7. Formule infantile selon l'une quelconque des revendications 1 à 4, qui est une formule infantile hypoallergénique pour enfant à terme, dans laquelle la source de protéines comprend de l'histidine à raison d'environ 0,2 % à environ 0,4 % en poids, de l'arginine à raison d'environ 1 % à environ 2 % en poids et de la tyrosine à raison d'environ 0,2 % à environ 0,4 % en poids.

8. Formule infantile selon l'une quelconque des revendications de 1 à 7 dans laquelle la source d'hydrates de carbone comprend du lactose.
